# EUROPÄISCHE PATENTSCHRIFT

(11) **EP 3 781 481 B1**
(45) Veröffentlichungstag und Bekanntmachung des Hinweises auf die Patenterteilung: **10.01.2024**
(21) Anmeldenummer: 19720508.1
(22) Anmeldetag: 18.04.2019
(51) Int. Cl.: B64D 11/06

(54) **FLUGZEUGSITZVORRICHTUNG**
AIRCRAFT SEAT DEVICE
ENSEMBLE SIÈGE D'AVION

(30) Priorität: 20.04.2018 DE 102018109588
(43) Veröffentlichungstag der Anmeldung: 24.02.2021
(73) Patentinhaber: Recaro Aircraft Seating GmbH & Co. KG, 74523 Schwäbisch Hall (DE)
(72) Erfinder: FRÖBEL, Marcel, 74547 Untermünkheim (DE); SCHREYER, Tim, 74523 Schwaebisch-Hall (DE); LAKEIT, Stefan, 97953 Königheim (DE); REICHERT, Jan, 71717 Beilstein (DE)
(74) Vertreter: Daub, Thomas
(86) Internationale Anmeldenummer: PCT/EP2019/060159
(87) Internationale Veröffentlichungsnummer: WO 2019/202108

(56) Entgegenhaltungen:
- EP-A1- 2 746 158
- WO-A1-2016/197104
- US-A1- 2016 280 376

## Beschreibung

### Stand der Technik

Die Erfindung betrifft eine Flugzeugsitzvorrichtung nach dem Oberbegriff des Patentanspruchs 1.

Es sind bereits Flugzeugsitzvorrichtungen mit zumindest einer Rückenlehne, mit zumindest einer Rückenlehnenbrücke, die die Rückenlehne zumindest in einer Querrichtung zumindest im Wesentlichen überspannt, und mit zumindest einem Klappenelement, das schwenkbar im Bereich der Rückenlehnenbrücke angeordnet ist, vorgeschlagen worden. Aus der EP2746158 ist eine Flugzeugsitzhaltevorrichtung mit zumindest einer Rückenlehne, mit zumindest einer von einer Rückenlehnenbrücke gebildeten Flugzeugsitzträgereinheit und mit zumindest einer Befestigungseinheit, die dazu vorgesehen ist, in zumindest einem Betriebszustand zumindest ein PED an der Rückenlehne austauschbar und bedienbar zu befestigen, bekannt.

Die Aufgabe der Erfindung besteht insbesondere darin, eine gattungsgemäße Vorrichtung mit verbesserten Eigenschaften hinsichtlich einer Sicherheit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzvorrichtung mit zumindest einer Rückenlehne, mit zumindest einer Rückenlehnenbrücke, die die Rückenlehne zumindest in einer Querrichtung zumindest im Wesentlichen überspannt, und mit zumindest einem Klappenelement, das schwenkbar im Bereich der Rückenlehnenbrücke angeordnet ist.

Erfindungsgemäss überdeckt das wenigstens eine Klappenelement zumindest in einem geschlossenen Zustand zumindest einen Rückenlehnenbereich oberhalb der Rückenlehnenbrücke. Unter einer "Flugzeugsitzvorrichtung" soll insbesondere eine Vorrichtung verstanden werden, die zumindest einen Teil oder einen gesamten Flugzeugsitz ausbildet. Unter einem "Flugzeugsitz" soll dabei insbesondere ein Sitz verstanden werden, der dazu vorgesehen ist, in einer Flugzeugkabine eines Flugzeugs auf einem Kabinenboden aufgeständert zu werden und auf dem ein Passagier während eines Flugs sitzen kann. Dabei weist der Flugzeugsitz einen Sitzboden und eine mit dem Sitzboden gekoppelte Rückenlehne auf, wobei die Rückenlehne vorzugsweise verschwenkbar mit dem Sitzboden verbunden ist, wodurch der Flugzeugsitz vorzugsweise in unterschiedliche Funktionsstellungen bewegbar ist. Unter einer "Rückenlehne" soll dabei insbesondere ein Teil eines Flugzeugsitzes verstanden werden, welcher einen Rücken eines auf dem Flugzeugsitz sitzenden Passagiers stützt. Die Rückenlehne ist vorzugsweise in einer TTL-Position im Wesentlichen senkrecht zu einer Aufständerebene, auf der der Flugzeugsitz aufgeständert ist, ausgerichtet und ist vorzugsweise schwenkbar mit einem Sitzboden des Flugzeugsitzes verbunden. Grundsätzlich ist es auch denkbar, dass die Rückenlehne starr mit einer Aufständereinheit verbunden und dadurch nicht schwenkbar zu dem Sitzboden ausgebildet ist. Unter einer "Rückenlehnenbrücke" soll insbesondere eine Einheit verstanden werden, die dazu vorgesehen ist, eine Rückenlehne zumindest teilweise, vorzugsweise insbesondere in einer Querrichtung, zu überbrücken. Insbesondere ist die Rückenlehnenbrücke dazu vorgesehen, zumindest zwei, vorzugsweise seitliche Begrenzungen der Rückenlehne miteinander zu verbinden. Insbesondere ist die Rückenlehnenbrücke in einem oberen Bereich der Rückenlehne angeordnet. Die Rückenlehnenbrücke ist mit ihren seitlichen Enden vorzugsweise jeweils in einem Seitenbereich der Rückenlehne mit der Rückenlehne fest verbunden, wobei die Rückenlehnenbrücke in einem Mittelbereich vorzugsweise einen Abstand zu der Rückenlehne aufweist, sodass insbesondere in dem Mittelbereich ein Freiraum zwischen der Rückenlehnenbrücke und der Rückenlehne gebildet ist. In dem Mittelbereich weist die Rückenlehnenbrücke vorzugsweise einen Abstand zu der Rückenlehne auf, der größer ist als 20 mm. Grundsätzlich ist es auch denkbar, dass die Rückenlehnenbrücke in ihrem Mittelbereich lediglich teilweise, vorzugsweise insbesondere lediglich in einem oberen Bereich einen Abstand zu der Rückenlehne aufweist und insbesondere an einem unteren Ende sich bis zu der Rückenlehne erstreckt. Dadurch könnte vorteilhaft ein kleines Aufbewahrungsfach im Bereich der Rückenlehnenbrücke gebildet werden, das sich zwischen einem oberen Ende der Rückenlehenbrücke und dem unteren Ende der Rückenlehnenbrücke erstreckt. Unter einem "oberen Bereich" der Rückenlehne soll insbesondere ein Bereich der Rückenlehne verstanden werden, der in einer aufrechten Stellung des Flugzeugsitzes, vorzugsweise bei einer zumindest im Wesentlichen senkrecht zu dem Boden ausgerichteten Rückenlehnenlängserstreckung, in einem einer Aufständereinheit des Flugzeugsitzes abgewandten Bereich der Rückenlehne angeordnet ist. Insbesondere ist der obere Bereich der Rückenlehne bezüglich einer Rückenlehnenlängsrichtung oberhalb eines Betrags von mehr als 40 %, vorzugsweise von mehr als 50 % und insbesondere von mehr als 55 % der Rückenlehnenlängserstreckung angeordnet. Unter einer "Rückenlehnenlängserstreckung" soll dabei insbesondere eine Haupterstreckung der Rückenlehne verstanden werden, die in einer aufrechten Stellung der Rückenlehne, also der TTL-Position, im Wesentlichen senkrecht zu der Aufständerebene verläuft. Die Rückenlehnenlängserstreckung erstreckt sich dabei von einem ersten unteren Ende der Rückenlehne, an dem die Rückenlehne der Aufständerebene zugewandt ist, bis an ein zweites oberes Ende, an dem die Rückenlehne eine Kopfstütze aufweist. Unter einer "Querrichtung" soll insbesondere eine Richtung verstanden werden, die, insbesondere in einem montierten Zustand des Flugzeugsitzes, orthogonal zu einer Sitzrichtung des Flugzeugsitzes ausgerichtet ist und vorzugsweise insbesondere von einem ersten Seitenbereich der Rückenlehne bis zu einem zweiten, gegenüberliegenden Seitenbereich der Rückenlehne verläuft. Unter "zumindest im Wesentlichen überspannt" soll insbesondere verstanden werden, dass sich die Rückenlehnenbrücke von einem ersten Seitenbereich der Rückenlehnenbrücke bis hin zu einem gegenüberliegenden Seitenbereich erstreckt und zumindest in über 50%, vorzugsweise in über 75% einer Quererstreckung der Rückenlehne einen Abstand zu der Rückenlehne aufweist. Unter einem "Klappenelement" soll insbesondere ein vorzugsweise flächiges Element verstanden werden, das zumindest dazu vorgesehen ist, zwischen zumindest zwei Stellungen verstellt, vorzugsweise verschwenkt zu werden, um wenigstens in einem geschlossenen Zustand zumindest teilweise an wenigstens einem Element, vorzugsweise zumindest an der Rückenlehnenbrücke, angelegt zu sein und dieses zumindest teilweise zu überdecken. Das Klappenelement weist vorzugsweise über einen Großteil seiner Erstreckung eine dünne Wandstärke, vorzugsweise von weniger als 5 mm auf, wobei in höher beanspruchten Bereichen, beispielsweise in Lagerbereichen, eine Aufdickung vorhanden sein kann. Das Klappenelement weist eine gebogene Kontur auf. Das Klappenelement weist vorzugsweise in einem unteren Bereich, in dem ein Lagerbereich des Klappenelements angeordnet ist, über den das Klappenelement mit der Rückenlehnenbrücke verbunden ist, einen im Wesentlichen ebenen Verlauf auf. In einem oberen Bereich, der in einem geschlossenen Zustand über eine oberste Kante der Rückenlehnenbrücke hinausragt, weist das Klappenelement eine Krümmung auf, die in dem geschlossenen Zustand in Richtung der Rückenlehne gerichtet ist. In dem Bereich, der in einem geschlossenen Zustand über eine oberste Kante der Rückenlehnenbrücke hinausragt, erstreckt sich das Klappenelement in geschlossenem Zustand in Richtung der Rückenlehne. Dabei überbrückt das Klappenelement in dem geschlossenen Zustand vorzugsweise einen Abstand zwischen einem Mittelbereich der Rückenlehnenbrücke und einer Rückseite der Rückenlehne. Unter einem "geschlossenen Zustand" soll insbesondere eine nach oben geklappte, insbesondere geschlossene Stellung des Klappenelements verstanden werden, in der das Klappenelement im Wesentlichen an die Rückenlehnenbrücke angeklappt ist und zumindest in einem Teilbereich parallel zu der Rückenlehnenbrücke ausgerichtet ist. Unter einem "Rückenlehnenbereich oberhalb der Rückenlehnenbrücke" soll insbesondere ein Bereich der Rückenlehne verstanden werden, der von der Rückenlehnenbrücke aus, in Richtung einer oberen Kante der Rückenlehne gesehen, direkt an die Rückenlehnenbrücke anschließt. Der Rückenlehnenbereich oberhalb der Rückenlehnenbrücke, der oberhalb der Rückenlehne angeordnet ist, weist eine Erstreckung in Vertikalrichtung der Rückenlehne von wenigstens 10 mm, vorzugsweise zumindest 20 mm und in einer besonders vorteilhaften Ausgestaltung von 40 mm auf. Die Vertikalrichtung der Rückenlehne ist dabei insbesondere orthogonal zu der Querrichtung der Rückenlehne ausgerichtet und erstreckt sich von einem unteren Ende der Rückenlehne zu einem oberen Ende der Rückenlehne. In einem geschlossenen Zustand des Klappenelements ist das Klappenelement möglichst nahe an einem über der Rückenlehnenbrücke angeordneten Element, wie insbesondere einem Monitor, angeordnet. Vorzugsweise schließt das Klappenelement in seinem geschlossenen Zustand zumindest im Wesentlichen unmittelbar an einer Unterkante des Elements, wie insbesondere des Monitors, an. Vorzugsweise sind unterschiedlich große Monitore für unterschiedliche Konfigurationen einer Rückenlehne mit ihrer Unterkante immer auf der gleichen Höhe angeordnet, sodass ein gleiches Klappenelement in einem geschlossenen Zustand immer einen gleichen, möglichst geringen Abstand zu der jeweiligen Unterkante des jeweiligen Monitors aufweist. Unter "vorgesehen" soll insbesondere ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung kann eine Flugzeugsitzvorrichtung besonders in einem Crashfall sicher für einen hinter dem Flugzeugsitz sitzenden Passagier bereitgestellt werden. Durch das Klappenelement kann ein möglicherweise in einem Crashfall für einen Passagier gefährlicher Kantenbereich der Rückenlehnenbrücke überdeckt und so vorteilhaft eine Verletzung, insbesondere durch ein Einhaken zwischen Rückenlehne und Rückenlehnenbrücke in einem Crashfall, zumindest weitestgehend verhindert werden.

Weiter ist erfindungsgemäss vorgesehen, dass der überdeckte Rückenlehnenbereich eine Höhenerstreckung von zumindest 20 mm aufweist. Unter einer "Erstreckung" soll insbesondere eine Ausdehnung in einer definierten Richtung verstanden werden. Unter einer "Höhenerstreckung" soll insbesondere eine Erstreckung in einer Vertikalrichtung der Rückenlehne verstanden werden. Unter "zumindest 20 mm" soll insbesondere verstanden werden, dass die Höhenerstreckung des überdeckten Rückenlehnenbereichs zumindest 20 mm, vorzugsweise zumindest 30 mm beträgt. In einer besonders vorteilhaften Ausgestaltung ist der überdeckte Rückenlehnenbereich von dem gesamten Bereich zwischen der Rückenlehnenbrücke und einem über der Rückenlehnenbrücke angeordneten Bildschirmbereich, in dem ein Bildschirm angeordnet ist, überdeckt. Dadurch kann vorteilhaft ein besonders großer Bereich oberhalb der Rückenlehnenbrücke überdeckt werden.

Ferner wird vorgeschlagen, dass die Rückenlehne zumindest ein Aufbewahrungsbehältnis ausbildet, das wenigstens zur Aufbewahrung von Literatur und/oder persönlichen Gegenständen vorgesehen ist und das zumindest teilweise in einem Bereich hinter der Rückenlehnenbrücke angeordnet ist. Unter einem "Aufbewahrungsbehältnis" soll insbesondere ein Behältnis verstanden werden, in dem Literatur und/oder persönliche Gegenstände verliersicher aufbewahrt werden können, wobei das Aufbewahrungsbehältnis vorzugsweise von einem Bodenabstützbereich, von Seitenbereichen, einer Rückwand und einer Frontwand gebildet ist, die zusammen ein taschenartiges Behältnis ausbilden. Es müssen weder der Bodenabstützbereich noch die Seitenbereiche, die Rückwand oder die Frontwand als durchgehende Wandungen ausgebildet sein. Beispielsweise wäre es denkbar, dass der Bodenabstützbereich nicht von einer durchgehenden Wandung, sondern von Zapfen oder anderen punktuellen Abstützbereichen gebildet ist, die an einem unteren Ende des Aufbewahrungsbehältnisses über dessen Breite verteilt sind. Das Aufbewahrungsbehältnis erstreckt sich vorzugsweise von einem Bereich hinter der Rückenlehnenbrücke bis in einen Bereich unterhalb der Rückenlehnenbrücke in dem ein Tisch in einer Verstaustellung angeklappt werden kann. Es wäre insbesondere auch denkbar, dass ein Bodenabstützbereich in einem Bereich hinter der Rückenlehnenbrücke angeordnet ist. Dabei wäre es insbesondere nicht notwendig, dass sich das Aufbewahrungsbehältnis bis in einen Bereich unterhalb der Rückenlehnenbrücke erstreckt. Unter "zumindest teilweise in einem Bereich hinter der Rückenlehnenbrücke" soll insbesondere verstanden werden, dass insbesondere ein oberer Bereich des Aufbewahrungsbehältnisses, der vorzugsweise insbesondere eine Befüllöffnung ausbildet, durch den Literatur und/oder persönliche Gegenstände in das Aufbewahrungsbehältnis eingebracht werden können, hinter der Rückenlehnenbrücke, insbesondere zwischen der Rückenlehnenbrücke und einer Rückseite der Rückenlehne angeordnet ist. Dadurch kann besonders vorteilhaft ein Aufbewahrungsbehältnis in die Rückenlehne integriert werden.

Es ist erfindungsgemäss vorgesehen, dass das Klappenelement in einem geschlossenen Zustand dazu vorgesehen ist, das befüllte Aufbewahrungsbehältnis zumindest teilweise zu verschließen. Unter "das befüllte Aufbewahrungsbehältnis teilweise zu verschließen", soll insbesondere verstanden werden, dass das Klappenelement zumindest die Befüllöffnung, die in einem Bereich zwischen der Rückenlehnenbrücke und der Rückseite der Rückenlehne angeordnet ist, abdeckt und dadurch im Wesentlichen verschließt. Es ist insbesondere vorteilhaft, dass in einem Zustand, in dem das Klappenelement das Aufbewahrungsbehältnis teilweise verschließt, Literatur oder persönliche Gegenstände in dem Aufbewahrungsbehältnis verstaut sein können. Dadurch kann das Klappenelement besonders vorteilhaft ausgebildet werden.

Des Weiteren wird vorgeschlagen, dass das Klappenelement dazu vorgesehen ist, in einem geschlossenen Zustand oberhalb der Rückenlehnenbrücke eine Tiefenerstreckung zur zumindest teilweisen Überbrückung eines Abstands zwischen der Rückenlehnenbrücke und der Rückenlehne zu erzielen. Unter einer "Tiefenerstreckung" soll insbesondere eine Erstreckung des Klappenelements in einem montierten Zustand in Richtung der Rückenlehne verstanden werden, wobei die Tiefenerstreckung insbesondere durch eine Krümmung des Klappenelements in Richtung der Rückenlehne erreicht wird. Unter einer "teilweisen Überbrückung" soll verstanden werden, dass ein Abstand in einer Sitzrichtung zwischen der Rückenlehnenbrücke und der Rückenlehne zumindest im Wesentlichen, vorzugsweise komplett überbrückt wird und so ein Zwischenraum zwischen der Rückenlehnenbrücke und der Rückseite der Rückenlehne im Bereich des Mittelbereichs der Rückenlehnenbrücke geschlossen wird. Dadurch kann das Klappenelement insbesondere eine insbesondere in einem Crashfall gefährliche Kante der Rückenlehnenbrücke bedecken und insbesondere ein Einhaken eines Passagiers in einem Crashfall zwischen der Rückenlehnenbrücke und der Rückenlehne verhindern.

Weiterhin wird vorgeschlagen, dass das Klappenelement direkt an der Rückenlehnenbrücke angebunden ist. Unter "direkt angebunden" soll insbesondere verstanden werden, dass eine Lagerung des Klappenelements der Rückenlehnenbrücke direkt an der Rückenlehnenbrücke angeordnet ist, wobei eine Lagerstelle für das Klappenelement vorzugsweise zumindest teilweise in einem Innenraum der Rückenlehnenbrücke angeordnet ist. Dadurch kann das Klappenelement besonders vorteilhaft an die Rückenlehne angebunden werden.

Es wird weiter vorgeschlagen, dass die Rückenlehnenbrücke ein Tischverriegelungselement aufweist, das in einem Bereich einer mittigen Einbuchtung des Klappenelements angeordnet ist. Unter einem "Tischverriegelungselement" soll insbesondere ein Element, wie insbesondere ein Hebel, verstanden werden, der einen schwenkbar an der Rückenlehne angeordneten Esstisch insbesondere in einer an die Rückenlehne angeklappten Stellung direkt oder indirekt an der Rückenlehne sichert. Dabei ist es denkbar, dass das Tischverriegelungselement in einem verriegelten Zustand direkt in einem formschlüssigen Kontakt mit dem einen Verriegelelement des Esstisches steht oder dass das Tischverriegelungselement zur Betätigung eines an der Rückenlehne, insbesondere der Rückenlehnenbrücke angeordneten Verriegelungselements vorgesehen ist, das zur formschlüssigen Verbringung mit einem äquivalent ausgestalteten Verriegelungselement des Esstisches vorgesehen ist. Unter einer "Einbuchtung des Klappenelements" soll insbesondere eine Ausnehmung, die insbesondere an einer unteren Kante des Klappenelements angeordnet ist verstanden werden, wobei sich die Einbuchtung von der unteren Kante nach oben in Richtung der oberen Kante des Klappenelements erstreckt. Zumindest ein oberes Ende der Einbuchtung weist einen Abstand zu der Rückenlehnenbrücke auf, an der das Klappenelement befestigt ist, wodurch ein Griffbereich ausgebildet wird in dem ein Benutzer das Klappenelement vorteilhaft ergreifen kann um es aus seiner geschlossenen Stellung in eine geöffnete Stellung zu verstellen. Dadurch kann die Rückenlehnenbrücke besonders vorteilhaft zur Verriegelung eines Esstisches an der Rückenlehne ausgestaltet werden.

Zudem wird vorgeschlagen, dass das Klappenelement aus einem Material ausgebildet ist, das ein E-Modul von 1500 MPa bis 3000 Mpa aufweist. Vorteilhaft ist das Klappenelement von einem Polycarbonat mit einer zerstörungsfreien Dehngrenze von 90% ausgebildet. Das Klappenelement ist dabei insbesondere aus einem Material gebildet, das sich bis zu einer Dehnung von 90% zerstörungsfrei verformen lässt. Das Klappenelement weist bei einer definierten Kraft von 150 N vorzugsweise eine Verformung von 10 mm auf. Dadurch kann das Klappenelement besonders vorteilhaft ausgebildet werden.

Weiter wird vorgeschlagen, dass das Klappenelement einen Verriegelungsmechanismus aufweist, der das Klappenelement in einem geöffneten und/oder in einem geschlossenen Zustand zumindest teilweise verriegelt. Unter einem "Verriegelungsmechanismus" soll insbesondere ein Mechanismus verstanden werden, der ein ungewolltes Herausbewegen des Klappenelements aus dem geöffneten und/oder dem geschlossenen Zustand zumindest im Wesentlichen verhindert. Dabei ist der Verriegelungsmechanismus insbesondere dazu vorgesehen, das Klappenelement in einem Normalbetriebszustand in dem geöffneten und/oder dem geschlossenen Zustand zu verriegeln und ein Herausbewegen aus einem dieser Zustände zu verhindern. Dadurch kann das Klappenelement für einen Flugbetrieb besonders vorteilhaft ausgebildet werden.

Ferner wird vorgeschlagen, dass das Klappenelement in einem geöffneten Zustand zumindest zur Lagerung von einem Element, vorzugsweise einem Tablet, vorgesehen ist. Unter "zur Lagerung von einem Element vorgesehen", soll insbesondere verstanden werden, dass sich ein Element, wie insbesondere ein Tablet Computer, zumindest mit einer Seite an dem Klappenelement abstützen kann, um so insbesondere bedienbar an der Rückenlehne, insbesondere zwischen der Rückseite der Rückenlehne und dem Klappenelement, gelagert zu sein. Dadurch kann das Klappenelement zumindest in einem geöffneten Zustand besonders vorteilhaft zur Anbindung eines Tablet-Computers verwendet werden.

Weiter wird vorgeschlagen, dass das Klappenelement dazu vorgesehen ist, in einem geschlossenen Zustand Bauteile, wie insbesondere Elektrobauteile, welche in der Rückenlehne und/oder der Rückenlehnenbrücke angeordnet sind, zu überdecken. Unter "Elektrobauteilen" sollen insbesondere Bauteile wie ein Steckerelement, ein USB-Adapter, ein NFC-Modul oder ein anderes, dem Fachmann als sinnvoll erscheinendes elektrisches und/oder elektronisches Bauteil versanden werden. Dadurch kann das Klappenelement besonders vorteilhaft ausgebildet werden.

Zudem wird vorgeschlagen, dass das Klappenelement einen Lagerbereich ausbildet über den das Klappenelement mit seinem oberen Ende an der Rückenlehne schwenkbar angeordnet ist. Dadurch kann das Klappenelement vorteilhaft ausgebildet werden.

Weiter wird vorgeschlagen, dass die Flugzeugsitzvorrichtung wenigstens einen Bildschirm umfasst, der in einem oberen Bildschirmbereich der Rückenlehne oberhalb der Rückenlehnenbrücke angeordnet ist. Unter einem "Bildschirm" soll dabei insbesondere eine elektronisch angesteuerte Bildschirmeinheit zur optischen Signalisierung von veränderlichen Informationen, wie insbesondere Bildern, verstanden werden. Der Bildschirm ist vorzugsweise als eine Displayeinheit, insbesondere als ein Monitor, ausgebildet. Insbesondere ist der Bildschirm beispielsweise als ein TFT- eine OLED-Display oder als ein anderes Display ausgebildet ist. Vorzugsweise ist es insbesondere denkbar, dass der Bildschirm als ein Touchscreen ausgebildet ist, also als eine berührungssensitive Bildschirmeinheit. Der Bildschirm ist vorzugsweise fest mit der Rückenlehne verbunden. Dadurch kann die Rückenlehne besonders vorteilhaft ausgebildet werden.

Ferner wird vorgeschlagen, dass das wenigstens eine Klappenelement zumindest in einem geschlossenen Zustand zumindest einen Rückenlehnenbereich zwischen dem Bildschirm und der Rückenlehnenbrücke überdeckt. Dadurch kann das Klappenelement in einem geschlossenen Zustand einen besonders gefährlichen Bereich der Rückenlehneneinheit abdecken.

Die erfindungsgemäße Flugzeugsitzvorrichtung soll hierbei nicht auf die oben beschriebene Anwendung und Ausführungsform beschränkt sein. Insbesondere kann die erfindungsgemäße Flugzeugsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer Flugzeugsitzvorrichtung in einem ersten Ausführungsbeispiel mit einer Rückenlehne, mit einer Rückenlehnenbrücke und einem Klappenelement in einem geschlossenen Zustand,
- Fig. 2: eine schematische seitliche Detaildarstellung der Rückenlehnenbrücke mit dem Klappenelement im geschlossenen Zustand,
- Fig. 3: eine schematische Darstellung einer Rückenlehne mit einer Rückenlehnenbrücke und einem Klappenelement in einem geöffneten Zustand,
- Fig. 4: eine schematische seitliche Detaildarstellung der Rückenlehnenbrücke mit dem Klappenelement im geöffneten Zustand und
- Fig. 5: eine schematische Darstellung einer Flugzeugsitzvorrichtung in einem zweiten Ausführungsbeispiel mit einer Rückenlehne, mit einer Rückenlehnenbrücke und einem Klappenelement in einem teilweise geöffneten Zustand.

### Beschreibung der Ausführungsbeispiele

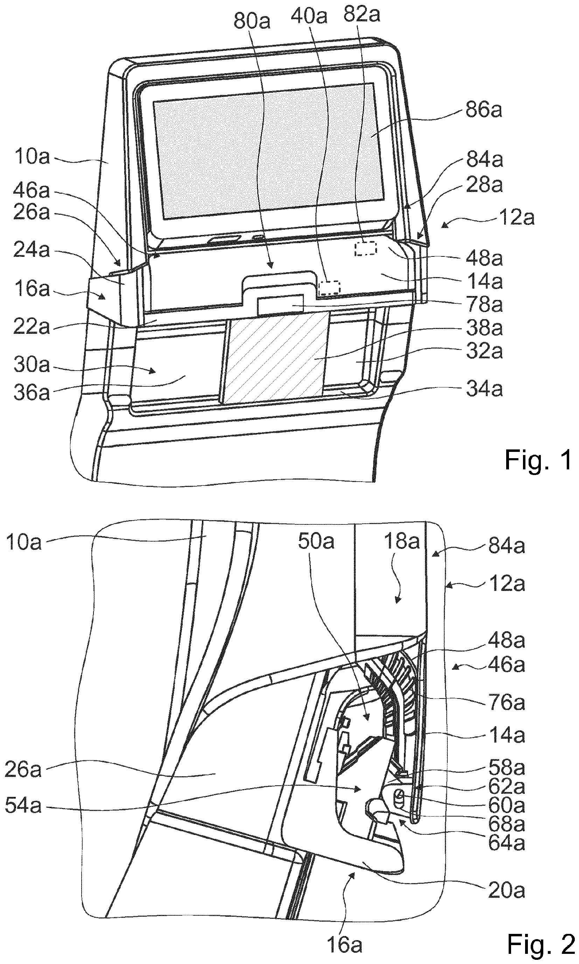

Die Figuren 1 bis 4 zeigen eine Flugzeugsitzvorrichtung in einem ersten Ausführungsbeispiel. Die Flugzeugsitzvorrichtung ist ein Teil eines nicht näher dargestellten Flugzeugsitzes. Der Flugzeugsitz ist in einem montierten Zustand in einem nicht näher dargestellten Flugzeug aufgeständert. Dazu weist der Flugzeugsitz eine nicht näher dargestellte Aufständereinheit auf, mittels der der Flugzeugsitz auf einer Aufständerebene in dem Flugzeug aufgeständert ist. Die Aufständerebene ist dabei von einem Kabinenboden des Flugzeugs gebildet. Der Flugzeugsitz kann vorzugsweise als ein Teil einer nicht näher dargestellten Flugzeugsitzreihe ausgebildet sein. Die Flugzeugsitzreihe ist vorzugsweise von zwei oder mehr nebeneinander angeordneten, gleich ausgebildeten Flugzeugsitzen gebildet. Die Aufständereinheit ist zur gemeinsamen Aufständerung aller Flugzeugsitze einer Flugzeugsitzreihe vorgesehen. Der Flugzeugsitz umfasst einen nicht näher dargestellten Sitzboden, der auf der Aufständereinheit befestigt ist. Der Sitzboden bildet eine Sitzfläche aus, auf der ein Fluggast sitzen kann. Die Flugzeugsitzvorrichtung umfasst eine Rückenlehne 10a. Die Rückenlehne 10a ist mit der Aufständereinheit verbunden. Vorzugsweise ist die Rückenlehne 10a verschwenkbar mit der Aufständereinheit gekoppelt. Die Rückenlehne 10a kann vorzugsweise relativ zu dem Sitzboden zwischen zumindest zwei Positionen, vorzugsweise einer Komfortposition und einer TTL-Position, verstellt, insbesondere verschwenkt werden. Dabei ist die Rückenlehne 10a in einer aufrechten Stellung in einer TTL-Position senkrecht zu der Aufständerebene ausgerichtet. Die Rückenlehne 10a weist eine Rückseite 12a auf. Die Rückseite 12a der Rückenlehne 10a ist einem hinter dem Flugzeugsitz angeordneten, weiteren Flugzeugsitz zugewandt. Der Flugzeugsitz umfasst einen nicht näher dargestellten schwenkbaren Esstisch, der an der Rückseite 12a der Rückenlehne 10a angeordnet ist. Der schwenkbare Esstisch ist in einem mittleren Bereich der Rückenlehne 10a angeordnet. Der schwenkbare Esstisch ist in einem unbenutzten Zustand an die Rückseite 12a der Rückenlehne 10a angeklappt. Dabei liegt der schwenkbare Esstisch in dem unbenutzten Zustand an der Rückseite 12a der Rückenlehne 10a an und verläuft dabei parallel zu dieser.

Die Flugzeugsitzvorrichtung umfasst eine Rückenlehnenbrücke 16a. Die Rückenlehnenbrücke 16a weist eine Längserstreckung auf, die im Wesentlichen parallel zu einer von der Rückenlehne 10a aufgespannten Ebene ausgerichtet ist. Zudem ist die Längserstreckung im Wesentlichen parallel zu der Querrichtung der Rückenlehne 10a ausgerichtet. Die Rückenlehnenbrücke 16a ist in dem montierten Zustand fest mit der Rückenlehne 10aa verbunden. Die Rückenlehnenbrücke 16a verbindet eine linke Seite der Rückenlehne 10aa mit einer rechten Seite der Rückenlehne 10a. Dabei ist die Rückenlehnenbrücke 16a unmittelbar oberhalb des Esstisches in dem angeklappten Zustand angeordnet. Auf der rechten Seite und der linken Seite der Rückenlehne 10a weist die Rückenlehnenbrücke 16a jeweils einen Anbindungsbereich 26a, 28a auf, in dem die Rückenlehnenbrücke 16a jeweils mit der Rückenlehne 10a verbunden ist. Zwischen den beiden Anbindungsbereichen 26a, 28a weist die Rückenlehnenbrücke 16a einen Mittelbereich 18a auf. Der Mittelbereich 18a ist beabstandet zu der Rückseite 12a der Rückenlehne 10a angeordnet. In dem Mittelbereich 18a weist die Rückenlehnenbrücke 16a einen Abstand zu der Rückenlehne 10a, insbesondere zu der Rückseite 12a der Rückenlehne 10a auf. Der Abstand zwischen einer der Rückenlehne 10a zugewandten Seite und der Rückseite 12a der Rückenlehne 10a beträgt dabei zumindest 20 mm. In dem Mittelbereich 18a ist zwischen der Rückenlehnenbrücke 16a und der Rückseite 12a ein Freiraum 42a ausgebildet. In dem Mittelbereich 18a ist zwischen der Rückenlehnenbrücke 16a und der Rückseite 12a ein Durchgangsbereich gebildet.

Die Rückenlehnenbrücke 16a ist mehrteilig ausgebildet. Die Rückenlehnenbrücke 16a ist von einer Grundplatte 20a und zwei mit der Grundplatte 20a verbundenen Abdeckplatten 22a, 24a verbunden. Grundsätzlich wäre es auch denkbar, dass die Rückenlehnenbrücke 16a von einer anderen Anzahl an Elementen gebildet ist. Es ist insbesondere denkbar, dass die Rückenlehnenbrücke 16a lediglich aus einem Element, beispielsweise lediglich einer Grundplatte oder von einer Grundplatte und einer anderen Anzahl an Abdeckplatten gebildet ist. Die Grundplatte 20a ist in einem montierten Zustand fest mit der Rückenlehne 10a gekoppelt. Die Grundplatte 20a bildet die Anbindungsbereiche 26a, 28a der Rückenlehnenbrücke 16a aus. Die Grundplatte 20a ist über die Anbindungsbereiche 26a, 28a mit der Rückenlehne 10a verbunden. Die Grundplatte 20a ist in den Anbindungsbereichen 26a. 28 jeweils mittels Schraubenverbindungen mit der Rückenlehne 10a verbunden. Grundsätzlich ist es auch denkbar, dass die Grundplatte 20a, also die Rückenlehnenbrücke 16a über eine andere, dem Fachmann als sinnvoll erscheinende Weise über einen Kraft- Stoff- und/oder Formschluss mit der Rückenlehne 10a verbunden ist. Die Abdeckplatten 22a, 24a sind jeweils formschlüssig mit der Grundplatte 20a verbunden. Die Abdeckplatten 22a, 24a sind dabei vorzugsweise über Schraubenverbindungen mit der Grundplatte 20a verbunden. Grundsätzlich ist es auch denkbar, dass die Abdeckplatten 22a, 24a über eine andere Weise, beispielsweise über eine Rastverbindung oder eine Stoffschlussverbindung, miteinander und/oder mit der Grundplatte 20a verbunden sind. Die erste Abdeckplatte 22a ist in einem unteren Bereich der Rückenlehnenbrücke 16a angeordnet. Die erste Abdeckplatte 22a deckt einen unteren Bereich der Grundplatte 20a ab, der dem Esstisch in einer angeklappten Stellung zugewandt ist. An der ersten Abdeckplatte 22a ist ein Tischverriegelungselement 78a angebracht, mittels dessen der Esstisch an der Rückenlehnenbrücke 16a in der angeklappten Stellung verriegelbar ist. Die zweite Abdeckplatte 24a ist in einem oberen Bereich der Rückenlehnenbrücke 16a angeordnet. Die zweite Abdeckplatte 24a deckt einen oberen Bereich der Grundplatte 20a ab. Die beiden Abdeckplatten 22a, 24a bilden eine zumindest teilweise nach hinten ausgerichtete Front der Rückenlehnenbrücke 16a aus. Die Abdeckplatten 22a, 24a spannen zusammen mit der Grundplatte 20a einen Innenraum auf. In dem Innenraum zwischen der Grundplatte 20a und den Abdeckplatten 22a, 24a können Bauteile des Flugzeugsitzes angeordnet sein.

Die Flugzeugsitzvorrichtung umfasst das Aufbewahrungsbehältnis 30a. Die Rückenlehne 10a bildet das Aufbewahrungsbehältnis 30a aus. Das Aufbewahrungsbehältnis 30a ist in die Rückseite 12a der Rückenlehne 10a eingebracht. Das Aufbewahrungsbehältnis 30a ist von einer in die Rückseite 12a der Rückenlehne 10a eingebrachten Tasche 32a ausgebildet. Grundsätzlich wäre es auch denkbar, dass das Aufbewahrungsbehältnis 30a lediglich von der Rückenlehnenbrücke 16a ausgebildet ist. Dabei wäre das Aufbewahrungsbehältnis 30a als kleine Verstaumöglichkeit für kleinere Utensilien, wie Schlüssel, Geldbeutel, Brillen, Mobiltelefone und/oder Ähnliches ausgebildet. Die Tasche 32a und damit das Aufbewahrungsbehältnis 30a erstrecken sich von einem Bereich oberhalb der Rückenlehnenbrücke 16a bis in einen Bereich unterhalb der Rückenlehnenbrücke 16a. An einem unteren Ende bildet die Tasche 32a eine Wandung 34a aus, die einen Boden des Aufbewahrungsbehältnisses 30a ausbildet. Eine Bodenwandung 36a der Tasche 32a bildet eine Rückwand des Aufbewahrungsbehältnisses 30a aus. Die Rückenlehne 10a umfasst ein Wandungselement 38a. Das Wandungselement 38a bildet eine Frontwand des Aufbewahrungsbehältnisses 30a aus. Das Wandungselement 38a ist mit einem oberen Ende an der Rückenlehnenbrücke 16a und mit einem unteren Ende an der unteren Wandung 34a der Tasche 32a befestigt. Das Wandungselement 38a ist mittig angeordnet. Das Wandungselement 38a weist eine Breite auf, die wesentlich kleiner ist als die Breite der Tasche 32a und dadurch des Aufbewahrungsbehältnisses 30a. Der Freiraum 42a, der zwischen dem Mittelbereich 18a der Rückenlehnenbrücke 16a und der Rückseite 12a der Rückenlehne 10a aufgespannt wird, bildet die Öffnung des Aufbewahrungsbehältnisses 30a aus. Durch die Öffnung des Aufbewahrungsbehältnisses 30a können Gegenstände, wie insbesondere auch Literatur, in das Aufbewahrungsbehältnisses 30a eingebracht und entnommen werden. Die von dem Freiraum 42a gebildete Öffnung des Aufbewahrungsbehältnisses 30a bildet eine Hauptbefüllöffnung des Aufbewahrungsbehältnisses 30a aus.

Die Flugzeugsitzvorrichtung umfasst ein Klappenelement 14a. Das Klappenelement 14a ist schwenkbar im Bereich der Rückenlehnenbrücke 16a angeordnet. Das Klappenelement 14a ist schwenkbar mit der Rückenlehnenbrücke 16a gekoppelt. Das Klappenelement 14a ist direkt schwenkbar an die Rückenlehnenbrücke 16a angebunden. Grundsätzlich wäre es auch denkbar, dass das Klappenelement 14a in einer anderen Weise an der Rückenlehne 10a befestigt ist. Insbesondere wäre es denkbar, dass das Klappenelement 14a an der Rückenlehne 10a direkt schwenkbar angebunden ist, vorzugswiese unmittelbar in dem Bereich der Rückenlehnenbrücke 16a. Das Klappenelement 14a ist als ein flächiges Element ausgebildet. Das Klappenelement 14a weist vorzugsweise eine Breite auf, die im Wesentlichen einer Breite des Mittelbereichs 18a der Rückenlehnenbrücke 16a entspricht. Grundsätzlich ist es auch denkbar, dass das Klappenelement 14a eine Breite aufweist, die der gesamten Breite der Rückenlehnenbrücke 16a entspricht.

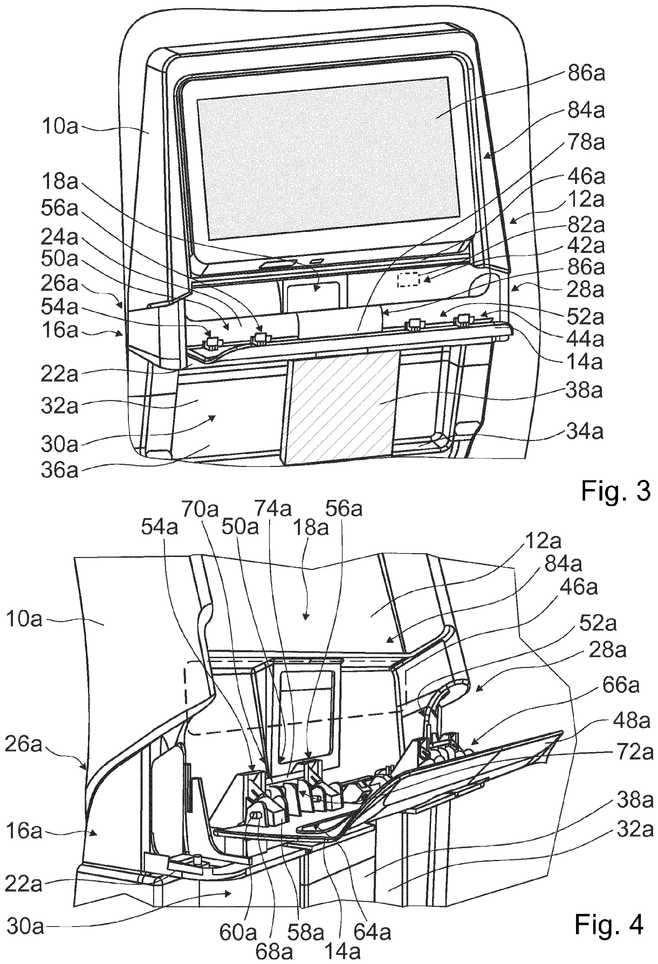

Das Klappenelement 14a ist verschwenkbar mit der Rückenlehnenbrücke 16a verbunden. Das Klappenelement 14a ist zwischen zwei Zuständen verstellbar, insbesondere verschwenkbar. Das Klappenelement 14a ist zwischen einem geschlossenen Zustand und einem geöffneten Zustand verstellbar. Der geschlossene Zustand und der geöffnete Zustand bilden dabei jeweils Maximalstellungen des Klappenelements 14a aus. Das Klappenelement 14a ist in dem geschlossenen Zustand arretierbar. Das Klappenelement 14a ist in dem geöffneten Zustand arretierbar. Grundsätzlich wäre es auch denkbar, dass das Klappenelement 14a in weiteren Zuständen arretierbar ist. In dem geschlossenen Zustand ist das Klappenelement 14a an die Rückenlehnenbrücke 16a angeklappt (siehe Fig 1 und Fig 2). In dem geschlossenen Zustand ist das Klappenelement 14a in einer im Wesentlichen senkrechten Ausrichtung, im Wesentlichen parallel zu der Rückseite 12a der Rückenlehne 10a, ausgerichtet. Der geschlossene Zustand des Klappenelements 14a ist als eine nach oben geklappte Stellung ausgebildet. In dem geöffneten Zustand ist das Klappenelement 14a mit einem oberen Ende von der Rückenlehnenbrücke 16a weggeklappt (siehe Fig. 3 und 4). In dem geöffneten Zustand ist das Klappenelement 14a um etwa 90 Grad aus dem geschlossenen Zustand herausgeschwenkt. In dem geöffneten Zustand ist das Klappenelement 14a in einer im Wesentlichen waagerechten Ausrichtung, im Wesentlichen orthogonal zu der Rückseite 12a der Rückenlehne 10a ausgerichtet.

Das Klappenelement 14a überdeckt in dem geschlossenen Zustand einen Rückenlehnenbereich 46a oberhalb der Rückenlehnenbrücke 16a. Das Klappenelement 14a ragt in dem geschlossenen Zustand über eine obere Kante der Rückenlehnenbrücke 16a hinaus. Der im geschlossenen Zustand überdeckte Rückenlehnenbereich 46a weist die gleiche Breite auf wie das Klappenelement 14a. Der von dem Klappenelement 14a in dem geschlossenen Zustand überdeckte Rückenlehnenbereich 46a weist eine Höhenerstreckung von 30 mm auf. Die Höhenerstreckung des überdeckten Bereichs ist dabei von der Rückenlehnenbrücke 16a ausgehend in Vertikalrichtung der Rückenlehne 10a hin in Richtung des oberen Endes der Rückenlehne 10a gemessen. Das Klappenelement 14a überragt die Rückenlehnenbrücke 16a in dem geschlossenen Zustand nach oben um 30 mm. Grundsätzlich ist es auch denkbar, dass das Klappenelement 14a einen größeren Rückenlehnenbereich oberhalb der Rückenlehnenbrücke 16a überdeckt und dabei die Rückenlehnenbrücke 16a um mehr als 30 mm, beispielsweise 70 mm überragt. Die Rückenlehne 10a weist in ihrem oberen Bereich einen Bildschirmbereich 84a auf, in dem ein Bildschirm 86a angeordnet ist. Für unterschiedlich konfigurierte Rückenlehnen 10a können in dem jeweiligen Bildschirmbereich 84a unterschiedlich große Bildschirme 86a angeordnet werden. Dabei sind alle unterschiedlich großen Bildschirme 86a, die in dem Bildschirmbereich 84a angeordnet werden können, mit jeweils ihrer Unterkante auf einer gleichen Höhe angeordnet. Die unterschiedlich großen Bildschirme 86a sind mit jeweils ihrer Unterkante jeweils an einem unteren Ende des Bildschirmbereichs 84a angeordnet. Je nachdem welche Größe der in dem Bildschirmbereich 84a angeordnete Bildschirm 86a aufweist, ist eine Freifläche zwischen einer Oberkante des entsprechenden Bildschirms 86a und der Oberkante der Rückenlehne 10a unterschiedlich groß. Die unterschiedlich großen Freiflächen sind dabei durch entsprechend unterschiedlich große Abdeckelemente abgedeckt. Das Klappenelement 14a überdeckt in einem geschlossenen Zustand einen Bereich zwischen der Rückenlehenbrücke 16a und der Unterkante des Bildschirms 86a. Das Klappenelement 14a überdeckt in einem geschlossenen Zustand einen Bereich zwischen der Rückenlehenbrücke 16a und dem Bildschirmbereich 84a.

Das Klappenelement 14a überdeckt in seinem geschlossenen Zustand vorzugsweise Elektronikbauteile 82a der Rückenlehne, wie beispielsweise einen Stecker für eine Stromversorgung, eine USB-Schnittstelle oder ein NFC-Modul, das in der Rückenlehne selber und/oder in der Rückenlehnenbrücke angeordnet ist. Das Klappenelement 14a weist zumindest eine Ausnehmung 40a auf. Die Ausnehmung 40a ist dazu vorgesehen, dass Kabel, wie beispielsweise Ladekabel oder Audiokabel eines Kopfhörers, aus einem Bereich hinter dem Klappenelement 14a, insbesondere aus einem Bereich des Aufbewahrungsbehältnisses 30a, in einen Bereich vor dem Klappenelement 14a, insbesondere in einen Bereich eines hinter der Flugzeugsitzvorrichtung angeordneten Flugzeugsitzes geführt werden können, insbesondere auch wenn das Klappenelement 14a in seinem geschlossenen Zustand angeordnet ist.

In dem geschlossenen Zustand ist das Klappenelement 14a dazu vorgesehen, das befüllte Aufbewahrungsbehältnis 30a zumindest teilweise zu verschließen. Das Klappenelement 14a überdeckt in dem geschlossenen Zustand die Befüllungsöffnung des Aufbewahrungsbehältnisses 30a, also den Freiraum 42a, der zwischen der Rückenlehnenbrücke 16a und der Rückseite 12a der Rückenlehne 10a gebildet ist. In dem geschlossenen Zustand des Klappenelements 14a können dabei Gegenstände, wie insbesondere Literatur, weiterhin in dem Aufbewahrungsbehältnis 30a angeordnet sein. Zur Schließung des Aufbewahrungsbehältnisses 30a erstreckt sich das Klappenelement 14a in dem geschlossenen Zustand oberhalb der Rückenlehnenbrücke 16a von einer Vorderseite der Rückenlehnenbrücke 16a bis hin zu der Rückseite 12a der Rückenlehne 10a. Das Klappenelement 14a weist in einem geschlossenen Zustand oberhalb der Rückenlehnenbrücke 16a eine Tiefenerstreckung auf. Durch die Tiefenerstreckung in dem geschlossenen Zustand oberhalb der Rückenlehnenbrücke 16a überbrückt das Klappenelement 14a oberhalb der Rückenlehnenbrücke 16a einen Abstand zwischen der Rückenlehnenbrücke 16a und der Rückseite 12a der Rückenlehne 10a. Das Klappenelement 14a weist einen abgewinkelten Teilbereich 48a auf, der sich in dem geschlossenen Zustand von der Rückenlehnenbrücke 16a bis zu der Rückseite 12a der Rückenlehne 10a erstreckt. Die Tiefenerstreckung ist durch den abgewinkelten Teilbereich 48a gebildet. In dem geschlossenen Zustand kontaktiert das Klappenelement 14a vorzugsweise die Rückseite 12a der Rückenlehne 10a in dem überdeckten Rückenlehnenbereich 46a. Dabei ist es auch denkbar, dass die Tiefenerstreckung durch einen gekrümmten Bereich oder eine Kombination aus einem abgewinkelten Teilbereich und einem gekrümmten Bereich gebildet ist.

Die Rückenlehnenbrücke 16a umfasst zur Anbindung des Klappenelements 14a eine Lagereinheit 44a. Die Lagereinheit 44a ist zumindest teilweise in dem von der Rückenlehnenbrücke 16a aufgespannten Innenraum angeordnet. Über die Lagereinheit 44a ist das Klappenelement 14a verschwenkbar mit der Rückenlehnenbrücke 16a gekoppelt. Die Lagereinheit 44a weist zwei rückenlehnenbrückenseitige Lagerbereiche 50a, 52a auf. Je ein Lagerbereich 50a, 52a ist in einem Seitenbereich der Rückenlehnenbrücke 16a angeordnet. Die Lagerbereiche 50a, 52a sind im Wesentlichen gleich ausgebildet, weswegen lediglich der eine Lagerbereich 50a näher beschrieben wird. Der Lagerbereich 50a bildet zwei Lagerstellen 54a, 56a aus. Die Lagerstellen 54a, 56a weisen jeweils einen Lagerbock 58a auf, an dem eine als Lagerstift ausgebildete Lagerachse 60a angebunden ist. Die Lagerstellen 54a, 56a sind an der Grundplatte 20a der Rückenlehnenbrücke 16a befestigt. Das Klappenelement 14a weist einen Anbindungsbereich 62a auf. Der Anbindungsbereich 62a ist von einem unteren Teilbereich des Klappenelements 14a gebildet, der dem abgewinkelten Teilbereich 48a abgewandt ist. Die Lagereinheit 44a weist zwei klappenelementseitige Lagerbereiche 64a, 66a auf. Die klappenelementseitigen Lagerbereiche 64a, 66a sind ebenfalls identisch zueinander ausgebildet, weswegen lediglich der eine Lagerbereich 64a näher beschrieben wird. Der klappenelementseitige Lagerbereich 64a ist äquivalent zu dem rückenlehnenbrückenseitigen Lagerbereich 50a ausgebildet. Der klappenelementseitige Lagerbereich 64a weist zwei Lageraufnahmen 68a auf, wobei in jeder Lageraufnahme 68a je eine der Lagerachsen 60a gelagert ist. Die Lageraufnahmen 68a sind als Langlöcher ausgebildet. Das Klappenelement 14a kann durch Verdrehung der an dem Klappenelement 14a angebrachten Lageraufnahmen 68a relativ zu den fest an der Rückenlehnenbrücke 16a angebrachten Lagerachsen 60a verschwenkt werden.

Das Klappenelement 14a weist einen Verriegelungsmechanismus 70a auf. Der Verriegelungsmechanismus 70a ist dazu vorgesehen, das Klappenelement 14a in einem geschlossenen Zustand zumindest teilweise zu verriegeln. Der Verriegelungsmechanismus 70a weist ein nicht näher dargestelltes Anschlagselement auf, das in dem geschlossenen Zustand des Klappenelements 14a ein Schwenken um die Lagerachsen 60a blockiert, wenn die Lagerachsen 60a an einem oberen Ende der entsprechenden als Langloch ausgebildeten Lageraufnahme 68a angeordnet sind (siehe Fig. 2). Aus dem geschlossenen Zustand muss das Klappenelement 14a zunächst nach oben Verschoben werden, bis die Lagerachsen 60a an einem unteren Ende der entsprechenden als Langloch ausgebildeten Lageraufnahme 68a angeordnet sind. Durch eine entsprechende Bewegung des Klappenelements 14a wird der Verriegelungsmechanismus 70a entriegelt in dem das nicht näher dargestellte Anschlagselement aus einem Formschluss gelöst wird und das Klappenelement 14a somit für eine Schwenkbewegung freigibt. Das Klappenelement 14a weist je Lagerbereich 64a, 66a ein weiteres Anschlagselement 72a auf, das in einem geöffneten Zustand des Klappenelements 14a an einem entsprechend ausgebildeten Anschlag 74a des entsprechenden Lagerbereichs 50a, 52a der Rückenlehnenbrücke 16a anschlägt, wodurch das Klappenelement 14a in der geöffneten Stellung gehalten und ein weiteres Verschwenken verhindert wird. Zur Bewegung des Klappenelements 14a aus dem geschlossenen Zustand muss das Klappenelement 14a also zunächst linear verschoben werden bevor eine Rotation um die Schwenkachse stattfinden kann.

Das Klappenelement 14a ist aus einem Kunststoff gebildet. Das Klappenelement 14a ist aus einem Material gebildet, das ein E-Modul von 2200 MPa (Megapascal) aufweist. Das Klappenelement 14a ist insbesondere mit seinem oberen abgewinkelten Bereich dazu vorgesehen, in einem Crashfall elastisch und/oder plastisch zerstörungsfrei verformt zu werden. Dadurch kann das Klappenelement 14a in einem Crashfall besonders vorteilhaft mögliche Aufprallenergie eines auf die Rückenlehne 10a prallenden Passagiers abbauen. Das Klappenelement 14a ist als ein Kunststoffgussteil ausgebildet. Das Klappenelement 14a ist insbesondere aus einem Polycarbonat gebildet.

Das Klappenelement 14a ist dazu vorgesehen, dass in einem geöffneten Zustand ein Element, wie insbesondere ein Tablet Computer, darauf gelagert werden kann. Der Tablet Computer kann dabei insbesondere mit einem unteren Ende auf einer Innenseite des Klappenelements 14a abgestellt werden und sich mit einer Rückseite 12a an der Rückseite 12a der Rückenlehne 10a abstützen. Zur besseren Lagerung eines Tablet Computers ist auf der Innenseite des Klappenelements 14a ein Antirutschelement 76a angebracht. Das Antirutschelement 76a ist insbesondere als eine Gummimatte ausgebildet, die auf die Innenseite des Klappenelements 14a geklebt ist.

Die Rückenlehnenbrücke 16a umfasst ein Tischverriegelungselement 78a. Das Tischverriegelungselement 78a ist dazu vorgesehen, den nicht näher dargestellten Tisch in einer angeklappten Stellung an der Rückenlehne 10a, insbesondere an der Rückenlehnenbrücke 16a, zu verriegeln. Das Tischverriegelungselement 78a ist mittig an der Rückenlehnenbrücke 16a angeordnet. Das Klappenelement 14a weist mittig in seinem Anbindungsbereich eine Einbuchtung 80a auf. Das Tischverriegelungselement 78a ist insbesondere in dem Bereich der mittigen Einbuchtung 80a des Klappenelements 14a angeordnet. Die Einbuchtung 80a ist dabei insbesondere größer ausgebildet als das Tischverriegelungselement 78a. Die Einbuchtung 80a ist so groß ausgebildet, dass zwischen dem Rand der Einbuchtung 80a, also dem Klappenelement, und der Rückenlehnenbrücke 16a, insbesondere dem Tischverriegelungselement 78a, ein Spalt gebildet ist. Die Einbuchtung 80a bildet einen Abstand zwischen dem Klappenelement 14a und der Rückenlehnenbrücke 16a. Dadurch ist die Einbuchtung 80a insbesondere vorteilhaft als Betätigungselement, insbesondere als Griffelement, ausgebildet, an dem das Klappenelement ergriffen und dadurch vorteilhaft von dem geschlossenen Zustand in den geöffneten Zustand verschwenkt werden kann.

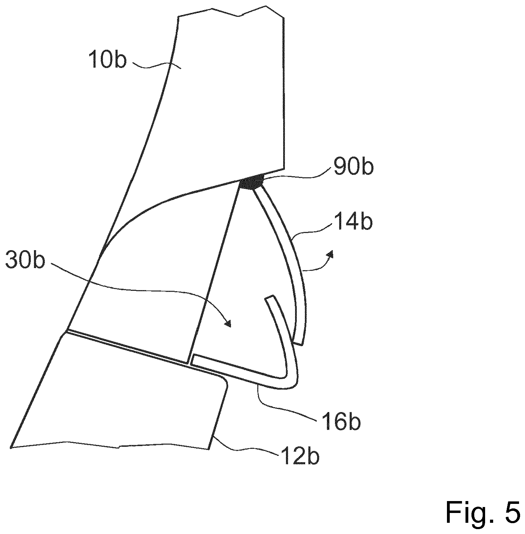

In Fig. 5 ist ein zweites Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 4, verwiesen werden kann. Zur Unterscheidung der Ausführungsbeispiele ist der Buchstabe a den Bezugszeichen des Ausführungsbeispiels in Fig. 1 bis 4 nachgestellt. In dem Ausführungsbeispiel der Fig. 5 ist der Buchstabe a durch den Buchstaben b ersetzt.

Die Figur 5 zeigt eine schematische Darstellung eines zweiten Ausführungsbeispiels einer Flugzeugsitzvorrichtung. Die Flugzeugsitzvorrichtung ist ein Teil eines nicht näher dargestellten Flugzeugsitzes. Der Flugzeugsitz ist in einem montierten Zustand in einem nicht näher dargestellten Flugzeug aufgeständert. Die Flugzeugsitzvorrichtung umfasst eine Rückenlehne 10b. Die Rückenlehne 10b ist mit einer Aufständereinheit des Flugzeugsitzes verbunden. Die Rückenlehne 10b weist eine Rückseite 12b auf. Die Rückseite 12b der Rückenlehne 10b ist einem hinter dem Flugzeugsitz angeordneten, weiteren Flugzeugsitz zugewandt. Der Flugzeugsitz umfasst einen nicht näher dargestellten schwenkbaren Esstisch, der an der Rückseite 12b der Rückenlehne 10b angeordnet ist.

Die Flugzeugsitzvorrichtung umfasst eine Rückenlehnenbrücke 16b. Die Rückenlehnenbrücke 16b weist eine Längserstreckung auf, die im Wesentlichen parallel zu einer von der Rückenlehne 10b aufgespannten Ebene ausgerichtet ist. Zudem ist die Längserstreckung im Wesentlichen parallel zu der Querrichtung der Rückenlehne 10b ausgerichtet. Die Rückenlehnenbrücke 16b ist in dem montierten Zustand fest mit der Rückenlehne 10ab verbunden. Die Rückenlehnenbrücke 16b verbindet eine linke Seite der Rückenlehne 10ab mit einer rechten Seite der Rückenlehne 10b. Dabei ist die Rückenlehnenbrücke 16b unmittelbar oberhalb des Esstisches in dem angeklappten Zustand angeordnet. Auf der rechten Seite und der linken Seite der Rückenlehne 10b weist die Rückenlehnenbrücke 16b jeweils einen Anbindungsbereich 26b, 28b auf, in dem die Rückenlehnenbrücke 16b jeweils mit der Rückenlehne 10b verbunden ist. Die Flugzeugsitzvorrichtung umfasst das Aufbewahrungsbehältnis 30b. Die Rückenlehne 10b bildet das Aufbewahrungsbehältnis 30b aus. Das Aufbewahrungsbehältnis 30b ist lediglich von der Rückenlehnenbrücke 16b ausgebildet.

Die Flugzeugsitzvorrichtung umfasst ein Klappenelement 14b. Das Klappenelement 14b ist schwenkbar im Bereich der Rückenlehnenbrücke 16b und einem Rückenlehnenbereich 46b oberhalb der Rückenlehnenbrücke 16b angeordnet. Das Klappenelement 14b ist schwenkbar mit der Rückenlehne 10b gekoppelt. Das Klappenelement 14b ist direkt schwenkbar an die Rückenlehne 10b angebunden. Das Klappenelement 14b weist einen Lagerbereich 90b auf, über den das Klappenelement 14b direkt mit der Rückenlehne gekoppelt ist. Der Lagerbereich 90b ist an einem oberen Ende des Klappenelements 14b angeordnet. Im Gegensatz zu dem ersten Ausführungsbeispiel ist das obere Ende des Klappenelements 14b der Rückenlehen 10b zugewandt und ein unteres Ende des Klappenelements 14b ist von der Rückenlehne 10b bzw. der Rückenlehnenbrücke 16b weg schwenkbar. Der Lagerbereich 90b ist von nicht näher dargestellten Lagerelementen, die fest mit dem Klappenelement 14b verbunden sind, und von nicht näher dargestellten korrespondierend ausgebildeten Lagerelementen, die mit der Rückenlehne 10b verbunden sind, ausgebildet. Der Lagerbereich 90b, über den das Klappenelement 14b an die Rückenlehne 10b schwenkbar angebunden ist, ist in einem Bereich unmittelbar unterhalb eines Bildschirmbereichs 84b der Rückenlehne 10b angeordnet. In einem geschlossenen Zustand überlappt das Klappenelement 14b mit einem unteren Bereich zumindest einen Teil der Rückenlehnenbrücke 16b. Das Klappenelement 14b umfasst einen nicht näher dargestellten Verriegelungsmechanismus über den das Klappenelement 14b in einem geöffneten und in einem geschlossenen Zustand verriegelbar ist.

### Bezugszeichen

- 10: Rückenlehne
- 12: Rückseite
- 14: Klappenelement
- 16: Rückenlehnenbrücke
- 18: Mittelbereich
- 20: Grundplatte
- 22: Abdeckplatte
- 24: Abdeckplatte
- 26: Anbindungsbereich
- 28: Anbindungsbereich
- 30: Aufbewahrungsbehältnis
- 32: Tasche
- 34: Wandung
- 36: Bodenwandung
- 38: Wandungselement
- 40: Ausnehmung
- 42: Freiraum
- 44: Lagereinheit
- 46: Rückenlehnenbereich
- 48: Teilbereich
- 50: Lagerbereich
- 52: Lagerbereich
- 54: Lagerstelle
- 56: Lagerstelle
- 58: Lagerbock
- 60: Lagerachse
- 62: Anbindungsbereich
- 64: Lagerbereich
- 66: Lagerbereich
- 68: Lageraufnahme
- 70: Verriegelungsmechanismus
- 72: Anschlagselement
- 74: Anschlag
- 76: Antirutschelement
- 78: Tischverriegelungselement
- 80: Einbuchtung
- 82: Elektronikbauteil
- 84: Bildschirmbereich
- 86: Bildschirm
- 90: Lagerbereich

## Patentansprüche

1. Flugzeugsitzvorrichtung mit zumindest einer Rückenlehne (10a; 10b), mit zumindest einer Rückenlehnenbrücke (16a; 16b), die die Rückenlehne (10a; 10b) zumindest in einer Querrichtung zumindest im Wesentlichen überspannt, und mit zumindest einem Klappenelement (14a; 14b), das schwenkbar im Bereich der Rückenlehnenbrücke (16a; 16b) angeordnet ist, wobei die Rückenlehne (10a) zumindest ein Aufbewahrungsbehältnis (30a) ausbildet, das wenigstens zur Aufbewahrung von Literatur und/oder persönlichen Gegenständen vorgesehen ist und das zumindest teilweise in einem Bereich hinter der Rückenlehnenbrücke (16a) angeordnet ist, wobei eine Befüllöffnung des Aufbewahrungsbehältnisses (30a), durch die Literatur und/oder persönliche Gegenstände in das Aufbewahrungsbehältnis (30a) eingebracht werden können, zwischen der Rückenlehnenbrücke (16a) und einer Rückseite der Rückenlehne (10a) angeordnet ist, **dadurch gekennzeichnet, dass** das wenigstens eine Klappenelement (14a; 14b), zumindest in einem geschlossenen Zustand zumindest einen Rückenlehnenbereich (46a; 46b) oberhalb der Rückenlehnenbrücke (16a; 16b) überdeckt, wobei der überdeckte Rückenlehnenbereich (16a; 16b) zumindest eine Höhenerstreckung von zumindest 20 mm aufweist und das Klappenelement (14a) in dem geschlossenen Zustand dazu vorgesehen ist, das befüllte Aufbewahrungsbehältnis (30a) zumindest teilweise zu verschließen und dazu zumindest die Befüllöffnung des Aufbewahrungsbehältnisses (30a) abdeckt und dadurch im Wesentlichen verschließt.

2. Flugzeugsitzvorrichtung nach Anspruch 1, **dadurch gekennzeichnet, dass** das Klappenelement (14a; 14b) dazu vorgesehen ist, in einem geschlossenen Zustand oberhalb der Rückenlehnenbrücke (16a; 16b) eine Tiefenerstreckung zur zumindest teilweisen Überbrückung eines Abstands zwischen der Rückenlehnenbrücke (16a; 16b) und der Rückenlehne (10a; 10b) zu erzielen.

3. Flugzeugsitzvorrichtung nach Anspruch 1 oder 2, **dadurch gekennzeichnet, dass** das Klappenelement (14a) direkt an der Rückenlehnenbrücke (16a) angebunden ist.

4. Flugzeugsitzvorrichtung nach einem der vorhergehenden Ansprüche, **dadurch gekennzeichnet, dass** das Klappenelement (14a) in seinem unteren Anbindungsbereich (62a) zumindest eine mittige Einbuchtung (80a) ausbildet.

5. Flugzeugsitzvorrichtung nach einem der vorhergehenden Ansprüche, **dadurch gekennzeichnet, dass** das Klappenelement (14a) aus einem Material ausgebildet ist, das ein E-Modul von 1500 MPa bis 300 MPa aufweist.

6. Flugzeugsitzvorrichtung nach einem der vorhergehenden Ansprüche, **dadurch gekennzeichnet, dass** das Klappenelement (14a) einen Verriegelungsmechanismus (70a) aufweist, der das Klappenelement (14a) in einem geöffneten und/oder in einem geschlossenen Zustand zumindest teilweise verriegelt.

7. Flugzeugsitzvorrichtung nach einem der vorhergehenden Ansprüche, **dadurch gekennzeichnet, dass** das Klappenelement (14a) in einem geöffneten Zustand zumindest zur Lagerung von einem Element, vorzugsweise einem Tablet, vorgesehen ist.

8. Flugzeugsitzvorrichtung nach einem der vorhergehenden Ansprüche, **dadurch gekennzeichnet, dass** das Klappenelement (14a) dazu vorgesehen ist, in einem geschlossenen Zustand Bauteile, wie insbesondere Elektrobauteile (82a), welche in der Rückenlehne (1 0a) und/oder der Rückenlehnenbrücke (16a) angeordnet sind zu, überdecken.

9. Flugzeugsitzvorrichtung nach einem der Ansprüche 1 bis 6 oder 8, **dadurch gekennzeichnet, dass** das Klappenelement (14b) einen Lagerbereich (86b) ausbildet über den das Klappenelement (14b) mit seinem oberen Ende an der Rückenlehne (10b) schwenkbar angeordnet ist.

10. Flugzeugsitzvorrichtung nach einem der vorhergehenden Ansprüche, **gekennzeichnet durch** wenigstens einen Bildschirm (86a), der in einem oberen Bildschirmbereich (84a) der Rückenlehne (10a) oberhalb der Rückenlehnenbrücke (16a) angeordnet ist.

11. Flugzeugsitzvorrichtung nach Anspruch 10, **dadurch gekennzeichnet, dass** das wenigstens eine Klappenelement (14a), zumindest in einem geschlossenen Zustand zumindest einen Rückenlehnenbereich (46a) zwischen dem Bildschirm und der Rückenlehnenbrücke (16a) überdeckt.

12. Flugzeugsitz mit einer Flugzeugsitzvorrichtung nach einem der vorhergehenden Ansprüche.

## Claims

1. Aircraft seat device,
with at least one backrest (1 0a; 10b),
with at least one backrest bridge (16a; 16b) which at least substantially spans the backrest (1 0a; 10b) at least in a transverse direction, and
with at least one flap element (14a; 14b) which is arranged pivotably in the region of the backrest bridge (16a; 16b),
wherein the backrest (10a) forms at least one storage container (30a), which is configured at least for a storage of literature and/or of personal objects and which is arranged at least partially in a region behind the backrest bridge (16a), wherein a filling opening of the storage container (30a), through which literature and/or personal objects is/are introducible into the storage container (30a), is arranged between the backrest bridge (16a) and a rear side of the backrest (10a),
**characterised in that** the at least one flap element (14a; 14b) covers, at least in a closed state, at least a backrest region (46a; 46b) above the backrest bridge (16a; 16b),
wherein the covered backrest region (46a; 46b) has at least a height extent of at least 20 mm and the flap element (14a) is configured, in the closed state, to at least partially close the filled storage container (30a) and for this purpose covers, and thus substantially closes, at least the filling opening of the storage container (30a).

2. Aircraft seat device according to claim 1,
**characterised in that** flap element (14a; 14b) is configured, in a closed state, above the backrest bridge (14a; 14b), to achieve a depth extent for at last partially bridging a distance between the backrest bridge (16a; 16b) and the backrest (10a; 10b).

3. Aircraft seat device according to claim 1 or 2,
**characterised in that** the flap element (14a) is connected directly to the backrest bridge (16a).

4. Aircraft seat device according to one of the preceding claims,
**characterised in that** the flap element (14a) forms at least one central indentation (80a) in its lower connection region (62a).

5. Aircraft seat device according to one of the preceding claims,
**characterised in that** the flap element (14a) is made of a material having an elastic modulus of 1,500 MPa to 300 MPa.

6. Aircraft seat device according to one of the preceding claims,
**characterised in that** the flap element (14a) comprises a locking mechanism (70a) which locks the flap element (14a) at least partially in an open state and/or in a closed state.

7. Aircraft seat device according to one of the preceding claims,
**characterised in that** the flap element (14a) is configured, in an open state, at least to support an element, preferably a tablet computer.

8. Aircraft seat device according to one of the preceding claims,
**characterised in that** the flap element (14a) is configured, in a closed state, to cover structural elements, like in particular electric components (82a), which are arranged in the backrest (10a) and/or in the backrest bridge (16a).

9. Aircraft seat device according to one of claims 1 to 6 or 8,
**characterised in that** the flap element (14b) forms a support region (86b) via which the flap element (14b) is arranged so as to be pivotable with its upper end at the backrest (10b).

10. Aircraft seat device according to one of the preceding claims,
**characterised by** at least one screen (86a), which is arranged in an upper screen region (84a) of the backrest (10a) above the backrest bridge (16a).

11. Aircraft seat device according to claim 10,
**characterised in that** the at least one flap element (14a) covers, at least in a closed state, at least a backrest region (46a) between the screen and the backrest bridge (16a).

12. Aircraft seat with an aircraft seat device according to one of the preceding claims.

## Revendications

1. Dispositif de siège d'avion,
avec au moins un dossier (10a ; 10b),
avec au moins un pont-dossier (16a ; 16b) au moins sensiblement enjambant le dossier (10a ; 10b) au moins en direction transversale, et
avec au moins un élément-clapet (14a ; 14b) disposé pivotablement dans la zone de pont-dossier (16a ; 16b),
le dossier (10a) formant au moins un récipient à stockage (30a) qui est conçu au moins pour stocker de la littérature et/ou des objets personnels et qui est disposé au moins en partie dans une zone derrière le pont-dossier (16a),
où une ouverture de remplissage du récipient à stockage (30a), par laquelle de la littérature et/ou des objets personnels peut/peuvent être introduite/introduits dans le récipient à stockage (30a), est disposée entre le pont-dossier (16a) et une face arrière du dossier (10a),
**caractérisé en ce que** l'au moins un élément-clapet (14a ; 14b) couvre au moins en état fermé au moins une zone de dossier (46a ; 46b) au-dessus du pont-dossier (16a ; 16b),
où la zone de dossier couverte (46a ; 46b) au moins comporte une étendue en hauteur d'au moins 20 mm et
l'élément-clapet (14a) est conçu, en état fermé, pour au moins partiellement fermer le récipient à stockage rempli (30a), couvrant à cette fin au moins l'ouverture de remplissage du récipient à stockage (30) et ce faisant sensiblement fermant ladite ouverture de remplissage.

2. Dispositif de siège d'avion selon la revendication 1,
**caractérisé en ce que** l'élément-clapet (14a ; 14b) est conçu pour achever, en état fermé, au-dessus du pont-dossier (16a ; 16b), une étendue de profondeur pour l'enjambement au moins partiel d'un écart entre le pont-dossier (16a ; 16b) et le dossier (10a ; 10b).

3. Dispositif de siège d'avion selon la revendication 1 ou 2,
**caractérisé en ce que** l'élément-clapet (14a) est relié directement au pont-dossier (16a).

4. Dispositif de siège d'avion selon l'une des revendications précédentes,
**caractérisé en ce que** l'élément-clapet (14a) forme dans sa zone de liaison inférieure (62a) au moins une encoche centrale (80a).

5. Dispositif de siège d'avion selon l'une des revendications précédentes,
**caractérisé en ce que** l'élément-clapet (14a) est formé d'un matériau ayant un module d'élasticité de 1500 MPa à 300 MPa.

6. Dispositif de siège d'avion selon l'une des revendications précédentes,
**caractérisé en ce que** l'élément-clapet (14a) comprend un mécanisme de verrouillage (70a) qui au moins partiellement verrouille l'élément-clapet (14a) en état ouvert et/ou en état fermé.

7. Dispositif de siège d'avion selon l'une des revendications précédentes,
**caractérisé en ce que** l'élément-clapet (14a) est conçu, en état ouvert, au moins pour supporter un élément, de préférence une tablette PC.

8. Dispositif de siège d'avion selon l'une des revendications précédentes,
**caractérisé en ce que** l'élément-clapet (14a) est conçu, en état fermé, pour couvrir des composants structurels, en particulier des composants électriques (82a), disposés dans le dossier (10a) et/ou dans le pont-dossier (16a).

9. Dispositif de siège d'avion selon l'une des revendications 1 à 6 ou 8,
**caractérisé en ce que** l'élément-clapet (14b) forme une zone de support (86b) par lequel l'élément-clapet (14b) est disposé pivotablement avec son extrémité supérieure sur le dossier (10b).

10. Dispositif de siège d'avion selon l'une des revendications précédentes,
**caractérisé par** au moins un écran (86a) disposé dans une zone d'écran supérieure (84a) du dossier (10a) au-dessus du pont-dossier (16a).

11. Dispositif de siège d'avion selon la revendication 10,
**caractérisé en ce que** l'au moins un élément-clapet (14a) couvre, au moins en état fermé, au moins une zone de dossier (46a) entre l'écran (86a) et le pont-dossier (16a).

12. Siège d'avion avec un dispositif de siège d'avion selon l'une des revendications précédentes.
